# EUROPÄISCHE PATENTSCHRIFT

(11) **EP 0 619 248 B1**
(45) Veröffentlichungstag und Bekanntmachung des Hinweises auf die Patenterteilung: **04.02.1998**
(21) Anmeldenummer: 93105391.2
(22) Anmeldetag: 01.04.1993
(51) Int. Cl.: B65G 43/08, B65G 47/31

(54) **Vorrichtung zum Einschleusen von Stückgutteilen auf einen Hauptförderer**
Device for feeding articles onto a main conveyor
Dispositif de transfert d'objets sur un convoyeur principal

(43) Veröffentlichungstag der Anmeldung: 12.10.1994
(73) Patentinhaber: Siemens Schweiz AG, 8047 Zürich (CH); SIEMENS AKTIENGESELLSCHAFT, 80333 München (DE)
(72) Erfinder: Egloff, Guido, 5523 Nesselnbach (CH)

(56) Entgegenhaltungen:
- EP-A- 0 190 906
- EP-A- 0 305 755
- EP-A- 0 343 613
- EP-A- 0 366 857
- EP-A- 0 383 615
- FR-A- 2 550 472

## Beschreibung

Die vorliegende Erfindung betrifft eine Vorrichtung nach dem Oberbegriff des Patentanspruchs 1 sowie eine Verwendung derselben.

Sortieranlagen zum Sortieren von Stückgutteilen werden beispielsweise beim Paketversand in Postbetrieben benötigt, um eine rasche und kostengünstige Zustellung der Pakete gewährleisten zu können. Eine stetige Zunahme der Güterströme im Stückgüterbereich bei steigenden Anforderungen an die Zustellungszuverlässigkeit und gleichzeitiger Forderung nach Reduktion der Kosten pro Stückgutteil bedingt leistungsfähige Sortieranlagen, wobei gerade die Kostenzielsetzung möglichst vollautomatische Sortieranlagen notwendig macht.

Sortieranlagen für Stückgutteile bestehen im wesentlichen aus mindestens einem meist in sich geschlossenen, beispielsweise aus einem Förderband oder dergleichen bestehenden Hauptförderer, auf dem die zu sortierenden Stückgutteile mit Hilfe von Einschleusvorrichtungen zunächst plaziert werden. Die Stückgutteile werden so lange auf dem Hauptförderer transportiert, bis eine mit der Zieladresse des Stückgutteiles übereinstimmende Ausschleusvorrichtung erreicht ist. Durch das Ausschleusen des Stückgutteils an dessen Bestimmungsort wird der Förderplatz wiederum frei zum erneuten Beschicken mit einem Stückgutteil mit Hilfe der Einschleusvorrichtung. Ein reibungsfreier Ablauf dieser Vorgänge hängt dabei in grossem Masse von der Zuverlässigkeit der Einschleusvorrichtung, insbesondere aber von der exakten Positionierung der Stückgutteile auf dem Hauptförderer ab: Werden Stückgutteile durch die Einschleusvorrichtung nicht präzise auf dem Hauptförderer plaziert, können Störungen auch nicht durch besonders raffiniert ausgebildete Ausschleusvorrichtungen oder durch besondere Vorsichtsmassnahmen beim Transport der Stückgutteile auf dem Hauptförderer vermieden werden. An Einschleusvorrichtungen, die zum Einschleusen von in Grösse, Form und Gewicht unterschiedlichen Stückgutteilen verwendet werden, müssen zudem erhöhte Anforderungen gestellt werden, damit die Stückgutteile exakt auf dem Hauptförderband positioniert werden. Dies gilt insbesondere für aus einzelnen Kippschalen bestehende Kippschalensortieranlagen, bei denen die einzuschleusenden Stückgutteile in der Mitte der Kippschalen plaziert werden müssen.

Eine bekannte Einschleusvorrichtung für Stückgutteile ist in der europäischen Patentanmeldung EP-0 305 755 beschrieben, wobei diese Einschleusvorrichtung im wesentlichen aus einer aus zwei Lichtschranken bestehenden Messstrecke, einer fiktiven Startlinie, einer Beschleunigungsstrecke, einer mit einem Rechner verbundenen Steuereinrichtung, einem Taktgeber zur Bestimmung der Fördergeschwindigkeit der Einschleusvorrichtung und einem Taktgeber zur Bestimmung der Fördergeschwindigkeit des Hauptförderers besteht. Die Länge und die Position des auf der Einschleusvorrichtung liegenden einzuschleusenden Stückgutteils wird gemäss den Angaben in dieser Druckschrift mit Hilfe der zwei in einem spitzen Winkel zueinander stehenden Lichtschranken gemessen. Nach Abschluss dieser Messungen wird die Vorderkante des einzuschleusenden Stückgutteils auf die durch den Taktgeber der Einschleusvorrichtung festgelegte fiktive Startlinie gebracht, von wo es bei Herannahen eines freien Förderplatzes auf dem Hauptförderer ab einem aus der Länge, der Position und der Geschwindigkeit des Hauptförderers berechenbaren Zeitpunkt auf der Beschleunigungsstrecke beschleunigt und auf den Hauptförderer eingeschleust wird. Da die fiktive Startlinie von der Länge eines einzuschleusenden Stückgutteils unabhängig ist, entsteht insbesondere bei kurzen Stückgutteilen eine Totzeit für den Einschleusvorgang. Diese Totzeit ergibt sich im wesentlichen aus der für den Transport des Stückgutteils von der zweiten Lichtschranke zur Startlinie benötigten Zeit und entsteht dadurch, dass alle Stückgutteile bis zur gleichen Startlinie befördert werden.

Der vorliegenden Erfindung liegt daher die Aufgabe zugrunde, eine Vorrichtung zum Einschleusen von Stückgutteilen anzugeben, bei der die durchschnittliche Einschleusfrequenz erhöht und die Messstrecke einfacher realisierbar ist.

Diese Aufgabe wird durch die im kennzeichnenden Teil des Patentanspruchs 1 angegebenen Massnahmen gelöst. Vorteilhafte Ausgestaltungen der Erfindung sowie eine Verwendung sind in weiteren Ansprüchen angegeben.

Die Erfindung weist folgende Vorteile auf: Durch die lediglich aus einer Messschranke bestehende Messstrecke ergeben sich insbesondere bei grossen Sortieranlagen mit einer grossen Anzahl an Einschleusvorrichtungen wesentliche Kosteneinsparungen. Zudem können weitere Messvorrichtungen zur Bestimmung der Position des Stückgutteils auf der Einschleusvorrichtung weggelassen werden, da durch die rechtwinklige Anordnung der Messschranke auf die Förderrichtung des Hauptförderers die Position der Stückgutteile beim Einschleusen automatisch berücksichtigt wird. Ferner kann die Einschleusfrequenz für Stückgutteile gegenüber den bekannten Einschleusvorrichtungen wesentlich gesteigert werden, da sich die Ausgangsposition für den Beschleunigungsvorgang nach der Länge eines einzuschleusenden Stückgutteils bestimmt und da die Beschleunigungsstrecke bs vorzugsweise aus mehreren Einschleusbändem besteht, die voneinander unabhängige Geschwindigkeiten aufweisen können, wodurch sich mehrere Stückgutteile auf der Einschleusvorrichtung gleichzeitig auf die Einschleusung vorbereiten lassen. Schliesslich werden durch die Verwendung eines einzigen zur Bestimmung der Fördergeschwindigkeit des Hauptförderers benötigten Taktgebers weitere Einsparungen ermöglicht, da auch die zum Einschleusen benötigten Geschwindigkeiten der Einschleusbänder von diesem Taktgeber abgeleitet werden.

Die Erfindung wird nachfolgend anhand einer Zeichnung beispielsweise näher erläutert. Sie zeigt eine Vorrichtung zum Einschleusen von Stückgutteilen auf einen Hauptförderer mit Hilfe einer Einschleusvorrichtung.

In der Fig. ist eine aus einem Hauptförderer HF und aus einer Einschleusvorrichtung ES bestehenden Vorrichtung zum Einschleusen von Stückgutteilen SG1 bis SG5 dargestellt, wobei der Hauptförderer HF aus Transporteinheiten SE besteht und beispielsweise Bestandteil einer Sortieranlage zum Sortieren der Stückgutteile SG1 bis SG5 ist. Der Hauptförderer HF ist weiter mit einem Taktgeber TG ausgerüstet, dessen Frequenz proportional zu einer Geschwindigkeit v₀ ist, mit der sich die in einer Hauptförderrichtung HFR bewegenden Transporteinheiten SE fortbewegen.

Die Einschleusvorrichtung ES schliesst mit dem Hauptförderer HF einen spitzen Winkel α ein und besteht aus einem Zuführungsband ZB, zwei Einschleusbändem EB1 und EB2, einem Riemenförderer RF, einer eine Messschranke MS enthaltenden Messvorrichtung und verschiedenen beispielsweise mit Lichtschranken realisierten Kontrollschranken LS1 bis LS3. Als wesentliches Merkmal der erfindungsgemässen Vorrichtung ist die senkrecht auf die Hauptförderrichtung HFR stehende Messschranke MS, die zusammen mit äusseren Begrenzungslinien des Hauptförderes HF und der Einschleusvorrichtung ES ein den spitzen Winkel α enthaltendes rechtwinkliges Dreieck bilden. Eine für die Ablaufsteuerung benötigte Steuereinheit sowie die dazugehörigen Verbindungen sind in der Fig. nicht dargestellt.

In den folgenden Ausführungen werden die einzelnen bei einer Einschleusung eines Stückgutteiles SG1 bis SG5 ausgeführten Schritte angegeben:

Zum Einschleusen wird ein Stückgutteil SG1 bis SG5 über das Zuführungsband ZB in eine anhand des Stückgutteils SG1 dargestellten Ausgangslage gebracht. Ist das an das Zuführungsband ZB angrenzende Einschleusband EB1 mit einem Stückgutteil SG2 belegt, so wird das Zuführungsband ZB zu dem Zeitpunkt gestoppt, in dem die Kontrollschranke LS1 durch das Stückgutteil SG1 unterbrochen wird. Bei freiem oder frei gewordenem Einschleusband EB1 wird das Stückgutteil SG1 vom Zuführungsband ZB auf das Einschleusband EB1 übergeben. Der Abschluss der Übergabe, welche durch die freiwerdende Kontrollschranke LS1 erfasst wird, wird der Steuereinheit angezeigt. Somit kann auf dem Zuführungsband ZB ein neues Stückgutteil bereitgestellt werden.

Das dem Einschleusband EB1 übergebene Stückgutteil unterbricht mit dessen Vorderkante die vorzugsweise ebenfalls als Lichtschranke realisierte Messschranke MS, worauf in der Steuereinheit von diesem Zeitpunkt an eine Zeitmessung vorgenommen wird. Diese Zeitmessung wird in dem Zeitpunkt gestoppt, in dem die Messschranke MS frei wird, d.h. in dem Zeitpunkt, in dem die Hinterkante des Stückgutteils die Messschranke MS überquert. Die gemessene Zeit wird danach zusammen mit der Fördergeschwindigkeit des Einschleusbandes EB1 zur Berechnung der Länge des Stückgutteils verwendet. Neben der eben erläuterten Längenmessung löst die freigewordene Messschranke MS gleichzeitig eine Verzögerung des Einschleusbandes EB1 aus, damit das Stückgutteil SG2 bzw. SG3 in einem definierten Abstand zur Messschranke MS zu stehen kommt. In dieser Position wartet das Stückgutteil SG2 bzw. SG3 , bis es auf den Hauptförderer HF eingeschleust werden kann. Sobald ein Förderplatz auf einer sich der Übergabestelle nähemden Transporteinheit SE frei verfügbar ist, wird das Einschleusband EB1 nach einem fix vorgegebenen Muster beschleunigt und dem Einschleusband EB2 übergeben. Dieses beschleunigt das Stückgutteil weiter auf eine Übergabegeschwindigkeit v₁ und übergibt es über den die gleiche Geschwindigkeit aufweisenden Riemenförderer RF der bestimmten Transporteinheit SE. Die Übergabegeschwindigkeit v₁ weist dabei eine in Hauptförderrichtung HFR weisende Geschwindigkeitskomponente auf, die gleich gross ist wie die Fördergeschwindigkeit v₀. Damit wird das Stückgutteil SG5 mit minimalem Reibungswiderstand an den Hauptförderer HF übergeben.

Am Ende des Einschleusbandes EB1 bzw. vor dem Übergang zum Einschleusband EB2 ist die Kontrollschranke LS2 vorgesehen, die eine analoge Funktion aufweist wie die Kontrollschranke LS1: Der Steuereinheit wird die Übergabe des Stückgutteils vom Einschleusband EB1 auf das Einschleusband EB2 angezeigt. Dadurch kann die Steuereinheit bereits zu diesem Zeitpunkt die Bandgeschwindigkeit des Einschleusbandes EB1 von der Beschleunigungsgeschwindigkeit auf die für die Übernahme und Längenmessung eines neuen Stückgutteils benötigte Geschwindigkeit zurücknehmen. Es wird durch diese Ausführungen deutlich, dass durch die Schachtelung von verschiedenen Arbeitsschritten die Leistungsfähigkeit der Einschleusvorrichtung bedeutend erhöht werden kann, denn in jedem durch die verschiedenen Bänder begrenzten Abschnitte kann jeweils ein Stückgutteil SG1 bis SG5 für die Einschleusung vorbereitet werden. Die in der Fig. dargestellten Stückgutteile SG1, SG2, SG4 und SG5 stellen demzufolge nicht nur verschiedene Positionen eines einzigen einzuschleusenden Stückgutteiles sondern verschiedene gleichzeitig auf die Einschleusung vorzubereitende Stückgutteile dar.

Im Bereich der Übergabestelle ist die dritte Kontrollschranke LS3 vorgesehen, die zur Überwachung des Spaltes zwischen der Einschleusvorrichtung ES und dem Hauptförderer HF verwendet wird. Ist aus irgendeinem Grund diese Kontrollschranke LS3 längere Zeit oder insbesondere in der Anlaufphase des Hauptförderers HF unterbrochen, so werden die Förderer gestoppt bzw. gar nicht in Gang gesetzt.

Durch die bereits erwähnte rechtwinklige Anordnung der Messschranke MS gegenüber der Hauptförderrichtung HFR müssen Stückgutteile SG1 bis SG5 nicht in der Mitte oder einer anderen vorgegebenen Position auf dem Zuführungsband ZB positioniert werden. Vielmehr kann ein Stückgutteil SG1 bis SG5 eine beliebige Position zwischen der linken und rechten Begrenzung des Zuführungsbandes ZB einnehmen, ohne dass Schwierigkeiten beim Einschleusvorgang entstehen können. Der Grund dazu liegt einerseits in der erwähnten rechtwinkligen Anordnung der Messschranke MS und anderseits in der Positionierung der Stückgutteile SG2 bzw. SG3 auf dem Einschleusband EB1 bezüglich der Messschranke MS. Die Positionierung besteht gemäss den oben angeführten Erläuterungen im immer gleich eingehaltenen Abstand des Stückgutteils SG2 bzw. SG3 bezüglich der Messschranke MS unabhängig von der Lage der Stückgutteile zwischen den Bandrändem, d.h. dass das Stückgutteil SG2 bzw. SG3 bezüglich dessen Hinterkante auf dem Einschleusband EB1 positioniert wird. Bezüglich der Einschleusförderrichtung esr ist demzufolge ein am rechten Förderrand des Einschleusbandes EB1 befindliches Stückgutteil SG2 weiter vorne liegend als ein am linken Förderrand befindliches Stückgutteil SG3. Zusammenfassend kann festgehalten werden, dass sich eine quer zur Einschleusförderrichtung esr vorhandene Verschiebung durch die geometrische Anordnung der Messschranke MS und durch die Referenzierung der Hinterkante eines Stückgutteils SG2 bzw. SG3 in einer parallel zur Einschleusförderrichtung esr entstehenden Verschiebung des Einschleusstartpunktes manifestiert. Diese parallel zur Einschleusförderrichtung esr erhaltene Verschiebung stimmt bei gleichbleibendem Beschleunigungsvorgang auf den Einschleusbändern EB1 und EB2 und dem Riemenförderer RF mit einer Distanz überein, die von einer Transporteinheit SE zurückgelegt werden muss, bevor die Übergabe des Stückgutteils SG1 bis SG5 erfolgen kann.

Der Einschleusvorgang muss für die Positionierung der Stückgutteile SG2 und SG3 auf dem Einschleusband EB1 nicht notwendigerweise unterbrochen werden. Denkbar ist auch, dass ein freier Förderplatz auf einer auf dem Hauptförderer HF herannahenden Transporteinheit SE verfügbar ist und das Stückgutteil SG2 bzw. SG3 aufnehmen kann, ohne dass dieses auf dem Einschleusband EB1 gestoppt werden muss.

Die zur Steuerung verwendete Steuereinheit der erfindungsgemässen Vorrichtung hat im Gegensatz zu der im Stand der Technik genannten keine Information über die Lage der Stückgutteile SG1 bis SG5 quer zur Einschleusförderrichtung esr, sondern nur über die Lage bezüglich der Längsachse der Einschleusrichtung d.h. bezüglich der Einschleusförderrichtung esr. Mit dieser Vereinfachung der Messvorrichtung gegenüber dem Stand der Technik ist keine Einschränkung bezüglich der Genauigkeit des Einschleusvorganges verbunden. Vielmehr lässt sich die beim Stand der Technik vorzufindende Totzeit eliminieren, wodurch die maximale Frequenz zum Einschleusen von Stückgutteilen gesteigert wird. Eine weitere Steigerung der Einschleusfrequenz ergibt sich durch die Verwendung von mehreren Einschleusbändern EB1 und EB2, da - wie ebenfalls bereits erwähnt - mehrere Stückgutteile SG1 bis SG5 gleichzeitig für die Einschleusung vorbereitet werden können.

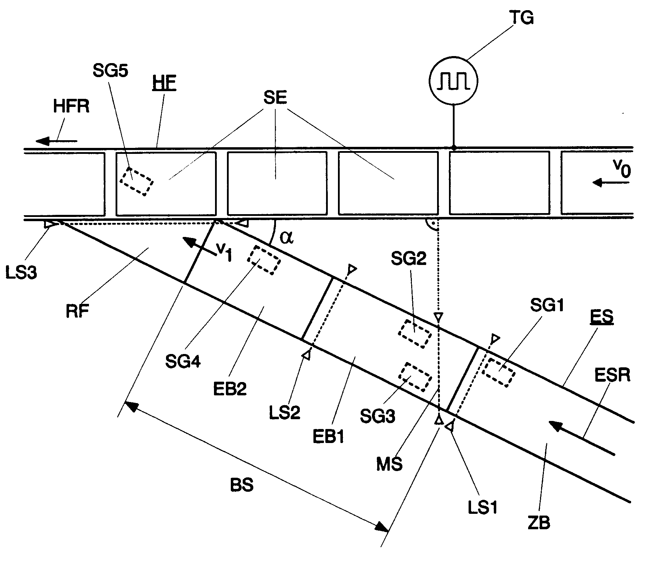

## Patentansprüche

1. Vorrichtung insbesondere für Kippschalensortieranlagen, bestehend aus einem Hauptförderer (HF) und einer Einschleusvorrichtung (ES) zum Einschleusen von Stückgutteilen (SG1, ..., SG5) auf den Hauptförderer (HF), wobei Einschleusförderrichtung (esr) und Hauptförderrichtung (hfr) einen spitzen Winkel (α) einschliessen, die Einschleusvorrichtung (ES) aus einem Zuführungsband (ZB), mindestens einem Einschleusband (EB1; EB2), das eine Beschleunigungsstrecke (bs) zur Beschleunigung der einzuschleusenden Stückgutteile (SG1, ..., SG5) bildet, und aus einer Messvorrichtung mit einer senkrecht zur Hauptförderrichtung stehenden Meßschranke (MS) zur Bestimmung der Länge der einzuschleusenden Stückgutteile (SG1, ..., SG5) besteht, **dadurch gekennzeichnet**, dass die Messvorrichtung einzig aus der auf der Hauptförderrichtung (hfr) senkrecht stehenden Messschranke (MS) besteht, die ein Stückgutteil (SG1, ..., SG5) zu dessen Vermessung jeweils vollständig durchläuft.

2. Vorrichtung nach Anspruch 1, **dadurch gekennzeichnet**, dass das Annähern einer freien Stelle oder einer freien Kippschale (SE) auf dem Hauptförderer (HF) feststellbar, der Zeitpunkt für die Beschleunigung des betreffenden Stückgutteils (SG1, ..., SG5) berechenbar, das Einschleusband (EB1) nach Abschluss der Längenmessung wahlweise anhaltbar und zum berechneten Zeitpunkt wieder startbar ist.

3. Vorrichtung nach Anspruch 2, **dadurch gekennzeichnet**, dass im Übergabebereich zwischen Einschleusvorrichtung (ES) und Hauptförderer (HF) ein Riemenförderband (RF) oder ein Flachgurtförderband vorgesehen ist.

4. Vorrichtung nach einem der vorangehenden Ansprüche, **dadurch, gekennzeichnet**, dass die Messschranke (MS) im Anfangsbereich der Beschleunigungsstrecke (BS) vorgesehen ist.

5. Vorrichtung nach einem der vorangehenden Ansprüche, **dadurch gekennzeichnet**, dass die Stückgutteile (SG1, ..., SG5) auf dem Zuführungsband (ZB) zur Übergabe an die Beschleunigungsstrecke (BS) bereitgestellt werden und dass am Ende des Zuführungsbandes (ZB), am Ende des ersten Einschleusbandes (EB1) sowie im Übergabebereich jeweils eine Kontrollschranke (LS1, ..., LS3) vorgesehen ist.

6. Vorrichtung nach einem der Ansprüche 3 bis 5, **dadurch gekennzeichnet**, dass am Hauptförderer (HF) ein Taktgeber (TG) vorgesehen ist, der eine zur Fördergeschwindigkeit (v₀) des Hauptförderers (HF) proportionale Taktfrequenz abgibt, die zur Einstellung der Geschwindigkeit (v₁) der Einschleusbänder (EB1, EB2) bzw. des Riemenförderbandes (RF) dient.

7. Vorrichtung nach einem der vorangehenden Ansprüche, **dadurch gekennzeichnet**, dass die Messschranke (MS) und/oder die Kontrollschranken (LS1, ..., LS3) je aus einer Lichtschranke oder dergleichen bestehen.

8. Vorrichtung nach einem der vorangehenden Ansprüche, **dadurch gekennzeichnet**, dass der Hauptförderer (HF) aus Kippschalen (SE) zur Aufnahme der Stückgutteile (SG1, ..., SG5) besteht.

9. Verfahren zur Anwendung in einer Vorrichtung nach Anspruch 1, die einen Hauptförderer (HF) und eine zum Einschleusen von Stückgutteilen (SG1, ..., SG5) vorgesehene Einschleusvorrichtung (ES) aufweist, die aus einem Zuführungsband (ZB), mindestens einem Einschleusband (EB1; EB2), das eine Beschleunigungsstrecke (BS) zur Beschleunigung der einzuschleusenden Stückgutteile (SG1, ..., SG5) bildet, und aus einer Messvorrichtung s. Anspruch 1 zur Bestimmung der Länge der einzuschleusenden Stückgutteile (SG1, ..., SG5) besteht, **dadurch gekennzeichnet**, dass die Messvorrichtung einzig aus der auf der Hauptförderrichtung (hfr) senkrecht stehenden Messschranke (MS) besteht, die von einem Stückgutteil (SG1, ..., SG5) zu dessen Vermessung vollständig durchlaufen wird, dass das Einschleusband (EB1) nach Abschluss der Längenmessung angehalten, das Annähern einer freien Stelle oder einer freien Kippschale (SE) auf dem Hauptförderer (HF) festgestellt, der Zeitpunkt für die Beschleunigung des betreffenden Stückgutteils (SG1, ..., SG5) berechnet und das Einschleusband (EB1) zum berechneten Zeitpunkt wieder gestartet wird.

## Claims

1. Device, in particular for tipping-tray sorting systems, comprising a main conveyor (HF) and a feeding device (ES) to feed items of piece goods (SG1, ..., SG5) on to the main conveyor (HF), whereby the feeding conveying direction (esr) and the main conveying direction (hfr) form an acute angle (α), the feeding device (ES) comprises a supply belt (ZB), at least one feeding belt (EB1; EB2) which forms an acceleration path (bs) to accelerate the items of piece goods (SG1, ..., SG5) to be fed, and a measuring device with a measuring barrier (MS), perpendicular to the main conveying direction, to determine the length of the items of piece goods (SG1, ..., SG5) to be fed, characterized in that the measuring device comprises only the measuring barrier (MS) perpendicular to the main conveying direction (hfr), through which measuring barrier in each case an item of piece goods (SG1, ..., SG5) passes completely for its measurement.

2. Device according to claim 1, characterized in that the approach of a free position or a free tipping tray (SE) on the main conveyor (HF) can be ascertained, the time for the acceleration of the relevant item of piece goods (SG1, ..., SG5) can be calculated, the feeding belt (EB1) can be selectively stopped at the end of the length measurement and can be started again at the calculated time.

3. Device according to claim 2, characterized in that in the transfer area between the feeding device (ES) and the main conveyor (HF) a belt conveyor (RF) or a flat belt conveyor is provided.

4. Device according to one of the preceding claims, characterized in that the measuring barrier (MS) is provided in the starting area of the acceleration path (BS).

5. Device according to one of the preceding claims, characterized in that the items of piece goods (SG1, ..., SG5) are made ready on the supply belt (ZB) for transfer to the acceleration path (BS) and in that at the end of the supply belt (ZB), at the end of the first feeding belt (EB1) and in the transfer area in each case a control barrier (LS1, ..., LS3) is provided.

6. Device according to one of claims 3 to 5, characterized in that at the main conveyor (HF) a clock generator (TG) is provided, which emits a clock frequency which is proportional to the conveying speed (v₀) of the main conveyor (HF) and which is used to adjust the speed (v₁) of the feeding belts (EB1, EB2) and the belt conveyor (RF).

7. Device according to one of the preceding claims, characterized in that the measuring barrier (MS) and/or the control barriers (LS1, ..., LS3) each comprise a light barrier or suchlike.

8. Device according to one of the preceding claims, characterized in that the main conveyor (HF) comprises tipping trays (SE) to accommodate the items of piece goods (SG1, ..., SG5).

9. Method for use in a device according to claim 1, which device has a main conveyor (HF) and a feeding device (ES) provided to feed items of piece goods (SG1, ..., SG5), which feeding device comprises a supply belt (ZB), at least one feeding belt (EB1; EB2) which forms an acceleration path (BS) to accelerate the items of piece goods (SG1, ..., SG5) to be fed, and a measuring device having a measuring barrier (MS) perpendicular to the main conveying direction to determine the length of the items of piece goods (SG1, ..., SG5) to be fed, characterized in that the measuring device comprises only the measuring barrier (MS) perpendicular to the main conveying direction (hfr), through which measuring barrier an item of piece goods (SG1, ..., SG5) passes completely for its measurement, in that the feeding belt (EB1) is stopped at the end of the length measurement, the approach of a free position or a free tipping tray (SE) on the main conveyor (HF) is ascertained, the time for the acceleration of the relevant item of piece goods (SG1, ..., SG5) is calculated and the feeding belt (EB1) is started again at the calculated time.

## Revendications

1. Dispositif, notamment pour des installations de tri à nacelles basculantes, constitué d'un convoyeur principal (HF) et d'un dispositif (ES) d'introduction de colis (SG1 à SG5) sur le convoyeur principal (HF), la direction (esr) de transport pour l'introduction et la direction (hfr) de transport principale délimitant un angle aigu (α), le dispositif (ES) d'introduction étant constitué d'une bande (ZB) d'amenée, d'au moins une bande (EB1 ; EB2) d'introduction, qui forme une voie (bs) d'accélération des colis (SG1 à SG5) à introduire, et d'un dispositif de mesure, qui comporte un barrage (MS) de mesure perpendiculaire à la direction principale de transport et qui est destiné à déterminer la longueur des colis (SG1 à SG5) à introduire, **caractérisé en ce que** le dispositif de mesure est constitué uniquement du barrage (MS) de mesure, qui est perpendiculaire à la direction principale (hfr) de transport, un colis (SG1 à SG5) le traversant en entier pour la mesure de celui-ci.

2. Dispositif suivant la revendication 1, **caractérisé en ce que** l'approche d'un endroit libre ou d'une nacelle basculante (SE) libre sur le convoyeur principal (HF) peut être détectée, l'instant d'accélération du colis concerné (SG1 à SG5) peut être calculé, la bande (EB1) d'introduction peut, au choix, être arrêtée, après que la mesure de la longueur est achevée, et être remise en marche à l'instant calculé.

3. Dispositif suivant la revendication 2, **caractérisé en ce qu'**il est prévu une bande (RF) de transport à courroie ou une bande de transport à ceinture plate entre le dispositif (ES) d'introduction et le convoyeur principal (HF).

4. Dispositif suivant l'une des revendications précédentes, **caractérisé en ce que** le barrage (MS) de mesure est prévu dans la zone de début de la voie (BS) d'accélération.

5. Dispositif suivant l'une des revendications précédentes, **caractérisé en ce que** les colis (SG1 à SG5) sont mis à disposition sur la bande (ZB) d'amenée pour le transfert à la voie (BS) d'accélération et il est prévu un barrage (LS1 à LS3) de contrôle à l'extrémité de la bande (ZB) d'amenée, à l'extrémité de la première bande (EB1) d'introduction, ainsi que dans la zone de transfert.

6. Dispositif suivant l'une des revendications 3 à 5, **caractérisé en ce qu'**il est prévu sur le convoyeur principal (HF) une horloge (TG), qui fournit une fréquence d'horloge proportionnelle à la vitesse (v₀) de transport du convoyeur principal (HF) et servant au réglage de la vitesse (v₁) des bandes (EB1, EB2) d'introduction ou de la bande (RF) de transport à courroie.

7. Dispositif suivant l'une des revendications précédentes, **caractérisé en ce que** le barrage (MS) de mesure et/ou les barrages (LS1 à LS3) de contrôle sont constitués chacun d'un barrage photoélectrique ou similaire.

8. Dispositif suivant l'une des revendications précédentes, **caractérisé en ce que** le convoyeur principal (HF) est constitué de nacelles (SE) basculantes pour la réception des colis (SG1 à SG5).

9. Procédé à utiliser dans un dispositif suivant la revendication 1, qui comporte un convoyeur principal (HF) et un dispositif (ES) d'introduction prévu pour introduire des colis (SG1 à SG5), qui est constitué d'une bande (ZB) d'amenée, d'au moins une bande (EB1 ; EB2) d'introduction, qui forme une voie (BS) d'accélération des colis (SG1 à SG5) à introduire, et d'un dispositif de mesure comportant un barrage (MS) de mesure perpendiculaire à la direction principale de transport et destiné à déterminer la longueur des colis (SG1 à SG5) à introduire, **caractérisé en ce que** le dispositif de mesure est constitué uniquement du barrage (MS) de mesure, qui est perpendiculaire à la direction (hfr) principale de transport et qui est parcouru en entier par un colis (SG1 à SG5) pour la mesure de celui-ci, en ce que l'on arrête la bande (EB1) d'introduction après la fin de la mesure de la longueur, on détecte le rapprochement d'un emplacement libre ou d'une nacelle (SE) basculante libre sur le convoyeur principal (HF), on calcule l'instant pour l'accélération du colis concerné (SG1 à SG5) et on remet en marche la bande (EB1) d'introduction à l'instant calculé.
